# EUROPEAN PATENT SPECIFICATION

(11) **EP 1 838 069 B1**
(45) Date of publication and mention of the grant of the patent: **10.04.2013**
(21) Application number: 07103070.4
(22) Date of filing: 26.02.2007
(51) Int. Cl.: H04L 29/06

(54) **Registration of peer to peer services**
Registrierung von Peer-to-Peer-Diensten
Enregistrement aux services de poste à poste

(30) Priority: 23.03.2006 US 388091
(43) Date of publication of application: 26.09.2007
(73) Proprietor: EMC Corporation, Hopkinton, MA 01748 (US)
(72) Inventor: Burch, Lloyd L., Payson, UT 84651 (US); Morris, Cameron C., Saratoga Springs, UT 84043 (US); Kinser, Stephen H., Saratoga Springs, UT 84043-5052 (US)
(74) Representative: Hanna, Peter William Derek

(56) References cited:
- US-A1- 2002 116 355
- US-A1- 2004 122 958
- US-A1- 2005 044 411

## Description

### Field

The invention relates generally to security and more particularly to techniques for registering for peer-to-peer (P2P) services.

### Background

Several years ago, online access to music was made popular and famous by the Napster® service. Essentially, Internet users identified one another using Napster® and identified songs that each user possessed. Next, a particular user's client machine would connect to another user's client machine directly in a peer-to-peer (P2P) fashion and the desired song was downloaded or shared between the users. The Napster® service brought to the attention of the general public the benefits and potential problems associated with P2P technology; although P2P technology existed prior to Napster®.

There is, of course, a variety of lawful and useful benefits to P2P technology. For example, with P2P technology users can directly connect to one another and share information, applications, share services, talk to one another, and/or video conference with one another. P2P technology has also been used to decrease bandwidth requirements needed to distribute popular media. That is, users can willingly or unwillingly facilitate the P2P delivery of media through their clients or devices. A disperse and cooperating network of clients, such as this, can rapidly and efficiently distribute media over the Internet and alleviate the bandwidth bottleneck associated with a single and central media distribution server.

One problem area with P2P technology is the security concern that information or media will be unlawfully appropriated from a user or that an unsuspecting client of a user may unwillingly participate in such a scenario. Generally, individuals like the idea of sharing information with others that are geographically dispersed but dislike and are concerned with the idea that their information or devices may be unlawfully accessed.

One example may be an employee of one organization who may want to share calendaring information with an employee of another organization. If a service (such as the calendar service in the present example) is enabled for P2P operation, a sharing user may not have the ability to limit access to the P2P service to a particular user. So, in the present example, the employee whose calendar is being shared may only be able to share his/her calendar service with all employees of the other organization or domain; although the employee may only want to share his calendar with a particular employee of the other organization.

Consequently, a P2P enabled service is typically enabled for a whole domain and is not capable of being limited to a particular user or a particular group of users. This creates a fairly significant security hole for P2P enabled services. As a result, users are either forced to expose P2P enabled services to individuals or groups that they do not want to access their services or they elect to not provide any P2P enabled services.

US-2005/0044411-A1 discloses systems in which a remote peer on a peer-to-peer network is granted or denied access to a resource based on the credentials presented by the remote peer. An access token that includes one or more security identification values which represent respectively one or more access rights in an access control system is generated. An execution thread that is associated with the access token thus generated attempts to access the resource on behalf of the remote peer. In some embodiments, the access control system includes a generic user account, and the access token that is generated for the remote peer includes the security identification value associated with the generic user account in the access control system.

US-2004/0122958-A1 discloses a system in which a central server operates a centralized data repository search engine within a peer-to-peer network and performs authentication and authorization operations with respect to users that access its services. A user at a peer node reviews peer-to-peer search results that have been gathered and returned by the centralized search engine. When the user desires to retrieve a file from another peer node, the user's peer node must obtain an authorization token from the central server, which authenticates the user or has previously authenticated the user. The user's peer node then presents the authorization token along with a request to retrieve the file from the other peer node. After verifying the authorization token, the other peer node responds with the requested file. If the other peer node cannot verify the authorization token, then the other peer node denies access to the file.

Therefore, there is a need for techniques that permit P2P services to be more securely and selectively enabled and distributed over a P2P network.

### Summary

The present invention provides systems, methods and computer programs for registering of peer-to-peer (P2P) services, in accordance with claims which follow.

### Brief Description of the Drawings

FIG. 1 is a diagram of a method for registering a peer-to-peer (P2P) service, according to an example embodiment.

FIG. 2 is a diagram of method for processing a registered P2P service, according to an example embodiment.

FIG. 3 is a diagram of a P2P registration system, according to an example embodiment.

FIG. 4 is a diagram of another P2P registration system, according to an example embodiment.

### Detailed Description

A "resource" includes a user, service, system, device, directory, data store, user, groups of users, combinations of these things, *etc.* A "principal" is a specific type of resource, such as an automated service or user that acquires an identity. A designation as to what is a resource and what is a principal can change depending upon the context of any given network transaction. Thus, if one resource attempts to access another resource, the actor of the transaction may be viewed as a principal.

Another type of resource discussed herein is an identity service. The identity service can perform a variety of beneficial functions. Some example identity services are described in our European patent applications EP-A- 1,560,394 ("Techniques for Dynamically Establishing and Managing Authentication and Trust Relationships"), EP-A-1,560,100 ("Techniques for Establishing and Managing a Distributed Credential Store"), and EP-A-1,562,100 ("Techniques for Dynamically Establishing and Managing Trust Relationships").

The network service provider discussed herein and below may be implemented as enhancements to these existing identity services with yet more beneficial features that provide secure registration of P2P services. This will be discussed in greater detail below.

Various embodiments of this invention can be implemented in existing network architectures. For example, in some embodiments, the techniques presented herein are implemented in whole or in part in the Novell® network and proxy server products, email products, identity service products, operating system products, and/or directory services products distributed by Novell®, Inc., of Provo, Utah.

Of course, the embodiments of the invention can be implemented in a variety of architectural platforms, operating and server systems, or applications. Any particular architectural layout or implementation presented herein is provided for purposes of illustration and comprehension only and is not intended to limit aspects of the invention.

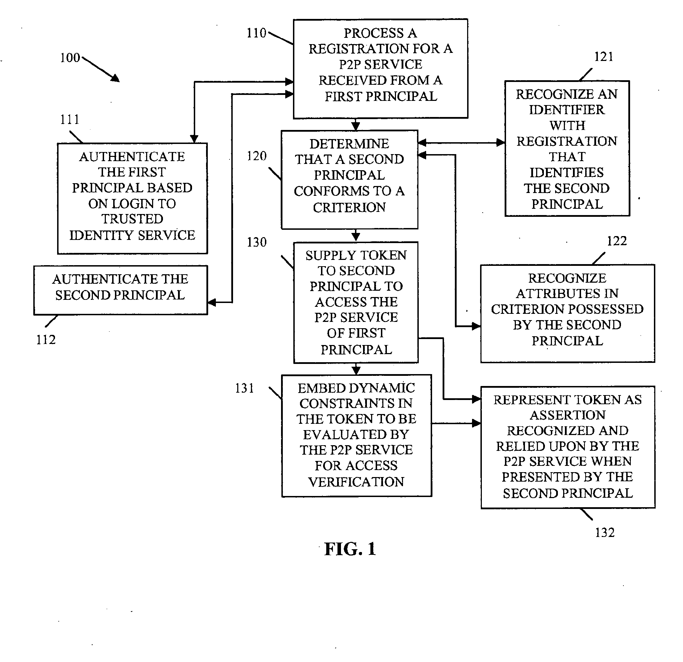

FIG. 1 is a diagram of a method 100 for registering a peer-to-peer (P2P) service, according to an example embodiment. The method 100 (hereinafter "registration service") is implemented in a machine-accessible and readable medium. The registration service is operational over and processes within a network. The network may be wired, wireless, or a combination of wired and wireless.

Initially, a first principal desires to register a particular P2P service. For example, a first principal may be a user and the P2P service may be a GroupWise® calendaring operation, distributed by Novell, Inc. of Provo, Utah.

The purpose of the registration is to define specifically what other principals or single principal may communicate with the registered P2P service using P2P communications. Conventionally, P2P services are enabled or disabled for whole domains and cannot be selectively enabled for operation based on a registration that defines such access.

The registration service processes as an enhancement within or as an external service to a network service provider. The network service provider may be viewed as identity services (enhanced and described above), an Internet Service Providers (ISP's), *etc.* for the target principal(s) who are to be granted access to the first principal's P2P service during the registration process.

With this context, the processing of the registration service is now described in greater detail with reference to FIG. 1. Accordingly, at 110, the registration service receives a registration for a P2P service of a first principal. The registration includes a criterion or a variety of criteria. So, the criterion may be an identifier that identifies a second principal. Alternatively, the criterion may be more complex and include attributes or conditions that define selective groupings of second principals or that describe situations or attributes that any second principal has to possess in order to be considered a valid second principal for purposes of accessing the first principal's P2P service. In an embodiment, the criterion may be viewed as a policy that is supplied by the first principal and enforced by the registration service to determine which second principals are to be granted access to the first principal's P2P service. The criterion or criteria may be any set of conditions or identifiers that may be evaluated or inspected by the registration service to determine what second principals are to be granted access to the P2P service, which is being registered.

According to an embodiment, at 111, the interactions with the first principal may have occurred within the context of the first principal authenticating to the registration service. This can occur via a single sign-on. For example, suppose the first principal is associated with a different network service provider or identity service and is actively logged into that different identity service when the first principal contacts the registration service to register the P2P service. Suppose further that the different identity service is trusted by and in secure communications with the registration service or the identity service of the registration service. In this scenario, the first principal's identity service may provide an assertion to the registration service that the first principal is who he/she purports to be and has been authenticated to the first principal's identity service. In this manner, the first principal may have logged into its own network service provider and securely be considered logged into the network service provider associated with the registration service.

In an embodiment, at 112, the registration service may similarly enforce authentication of the second principal's that desire to use the first principal's P2P service. Thus, not just any second principal can assert to be a valid second principal authorized to access the first principal's P2P service, because the registration service may enforce authentication mechanisms on the second principals before processing any request to access the first principal's P2P service.

At 120, the registration service determines that there is a second principal or set of second principals that conform to the criterion defined by the first principal in the registration of the P2P service.

As was discussed before, this determination can occur in a variety of manners some may be straightforward, such as when, at 121, the registration service recognizes an identifier with registration (via the criterion) that identifies the second principal. It may also occur in a more complex or dynamic manner, at 122, where attributes or values for attributes that are defined in the criterion are dynamically resolved by the registration service to determine if the second principal possesses the proper values for the attributes to access the P2P service.

Attributes may include a variety of information that may be manually supplied by a second principal or automatically acquired from the second principal. Additionally, attributes may include environmental information, temporal information, configuration information, profile information, network service provider information, role-based information, and the like. Attribute values may also include ranges, such as time range values between the times of 10:00 am and 6:00 pm. The attributes may be static (constants recorded in a data repository) and/or dynamic (resolved based on state at the time of a request for P2P access).

At 130, the registration service supplies a token to the second principal to access the P2P service assuming that the second principal successfully conformed to the criterion defined in the registration.

According to an embodiment, at 131, the registration service may also embed dynamic constraints in the token. These dynamic constraints may be dynamically and in real time evaluated by the P2P service itself when the second principal attempts to access the P2P service. So, the attributes or constraints may be evaluated by the registration service and also evaluated a second time by the P2P service itself. Furthermore, the second evaluation may include the same or different constraints or attributes from that which was included in the first evaluation. This situation may prevent a second principal from having a token stolen or a token distributed in an authorized fashion by the second principal to a different principal, since the P2P service is in a position to re-evaluate the constraints when access is attempted to the P2P service.

In an embodiment, at 132, the registration service may represent the token as an assertion. This assertion may be subsequently relied upon by the P2P service when it is presented to the P2P service by the second principal in an attempt to gain access.

Once a second principal has a valid token, that token may be presented to the P2P service of the first principal and a valid P2P connection or communication may be established.

So, in the initial example above where the P2P service is a calendaring service, consider the following scenario to further illustrate operation of the registration service. Cameron is a first principal associated with a domain of and network service provider of Novella®, Inc., of Provo Utah (domain name "novell.com"). Joe is a second principal associated with a domain and network service provider of Road Runner® (domain name "rr.com"). Cameron logs into novell.com and contacts the registration service to register his GroupWise® calendaring service; during registration Cameron includes a criterion that identifies Joe as joe@rr.com. Next, Joe logs into rr.com and is supplied a token or key to access the calendaring service, since Joe's email (identifier) is Joe@rr.com. Joe then accesses his own version of GroupWise® and attempts to read Cameron's calendar for purposes of setting up a meeting between the two. Joe's GroupWise® calendaring service attempts to establish a P2P connection with Cameron's GroupWise® calendaring service and presents the key. Cameron's GroupWise® calendaring service identifies the key and sets up the P2P connection between the two services. Cameron provided selective access to his P2P service (GroupWise®) to just Joe and did not have to make it accessible to all users of the rr.com domain; this was achieved via the novel processing of the registration service described above.

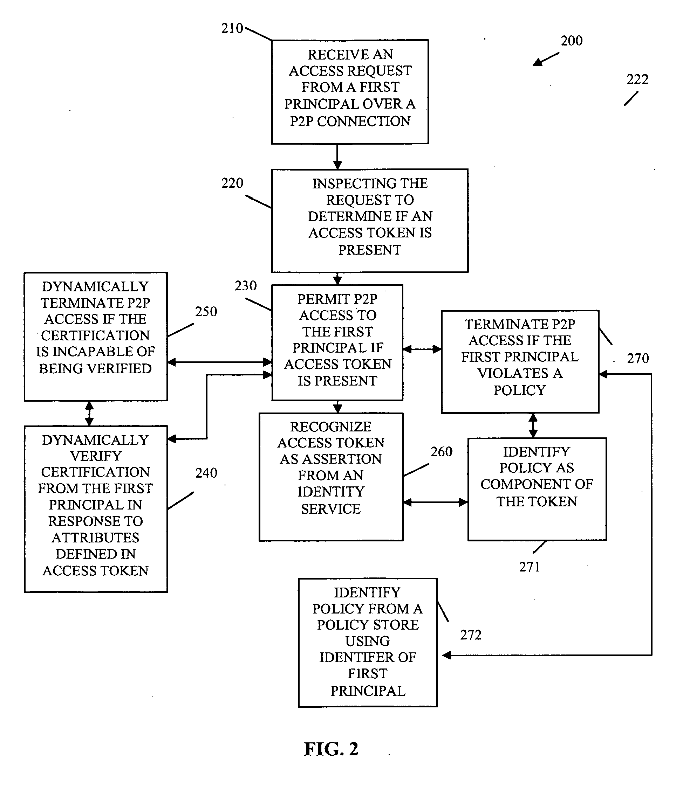

FIG. 2 is a diagram of method 200 for processing a registered P2P service, according to an example embodiment. The method 200 (hereinafter "registered P2P service" is implemented in a machine-accessible and readable medium and is operational over a network. The network may be wired, wireless, or a combination of wired and wireless. In an embodiment, the registered P2P service represents the processing of the P2P service that is registered by the registration service represented by the method 100 of the FIG. 1. It is noted that the registered P2P service may be any modified P2P enabled service that includes the enhanced processing presented herein and below.

At 210, the registered P2P service receives an access request from a first principal over a P2P connection. The registered P2P service was previously registered via interactions with the registration service described as the method 100 and depicted in the FIG. 1. The registered P2P service is associated with a particular principal or group of principals.

At 220, the registered P2P service inspects the access request to determine if an access token is present with the request. The access token may be included with the request or may be acquired or derived from the request.

If the token is present, then at least an initial hurdle is satisfied with respect to the first principal that is requesting access to the registered P2P service. With respect to the discussion of FIG. 2, the first principal is associated with the requesting principal that desires to access the registered P2P service. Notice that this is reversed from the discussion of FIG. 1 and that the designation of first and second is relative and depends upon the context of any given transaction.

At 230, the mere presence of the token is sufficient to permit access to the registered P2P service. However, in some cases, at 240, the access to the registered P2P service may be dynamically terminated if attributes are not verified to provide certification of the first principal. That is, the token may define attributes that the registered P2P service dynamically resolves values for when access is attempted and if satisfied the registered P2P service certifies the first principal for access. Under some conditions, at 250, the certification of the first principal's access to the registered P2P service may be dynamically terminated if the attributes change or are not capable of being satisfactorily resolved.

According to an embodiment, at 260, the registered P2P service may recognize the access token as an assertion from an identity service or network service provider. So, a trusted identity service may assert that the first principal is authorized to access the registered P2P service in a P2P connection and the registered P2P service relies on this assertion based on its relationship with the identity service.

In still another embodiment, at 270, the registered P2P service may terminate P2P access if the first principal violates a defined policy. The policy may actually be dynamically identified as a component of the access token, as depicted at 271. At 272, the registered P2P service alternatively identifies the policy from a policy store using an identifier for the first principal to locate the proper policy from the policy store. The policy provides a mechanism by which the registered P2P service can constrain or self police access occurring via the first principal. Policies may be dynamically defined and evaluated or may be statically defined and dynamically evaluated.

The register service represented by the method 100 of the FIG. 1 describes how a P2P service may be registered to selectively control access to the P2P service. The registered P2P service of the FIG. 2 represents a wrapper or initial processing associated with a modified or enhanced P2P service. The wrapper enforces a token before permitting full access to the P2P service. Again, the processing of the registered P2P service may be embedded as an enhancement inside existing P2P enabled services or may be implemented as a separate wrapper that is invoked when the registered P2P service is initially called or connected to over a P2P connection.

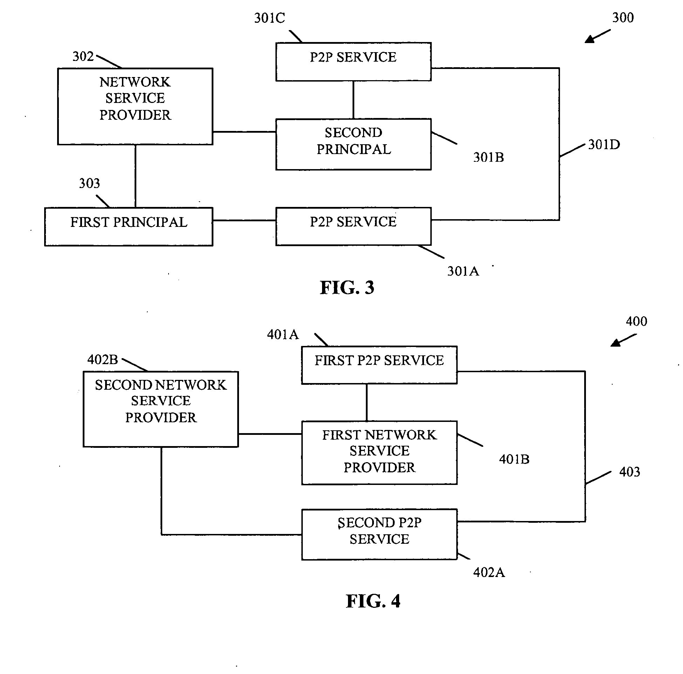

FIG. 3 is a diagram of a P2P registration system 300, according to an example embodiment. The P2P registration system 300 is implemented in a machine-accessible and readable medium and is operational over a network. The network may be wired, wireless, or a combination of wired and wireless. In an embodiment, the P2P registration system 300 implements, among other things, the processing depicted with the methods 100 and 200 of the FIGS. 1 and 2.

The P2P registration system 300 includes a P2P service 301A and a network service provider 302. Each of these components and their interactions with one another will now be discussed in detail.

The P2P service 301A is a P2P enabled service over a network that has its access restricted based on prior established registration. An example of a modified P2P service 301A to facilitate selective P2P connectivity was presented above with respect to the method 200 of the FIG. 2. The P2P service 301A includes two portions.

A first portion enforces access based on the presence of a token and/or dynamic confirmation of constraints or attributes possessed by a requestor (principal). The second portion is any intended service that is the core of the P2P service. So, if the P2P service 301A is calendaring services (as in the continuing example) then the second portion are the features and functions, which are available within that calendaring service. It is noted that there is no limitation as to what the second portion may be, it is constrained only by what service is desired to be made P2P compatible. Thus, it is the first portion that is a novel enhancement and that facilitates selective access to the second portion (legacy portion). Again, the first portion may be implemented as part of the second portion (integrated therewith) or it may be entirely separated from the second portion and implemented as a wrapper or script invoked when access is attempted to the second portion a first time.

The network service provider 302 manages access registrations made by first principals 303 to the P2P service 301A and distributes access tokens to second principal(s) 301B that satisfy criterion or attribute conditions defined by the registration performed by the first principals 303. Examples of the processing and interactions of the network service provider 302 vis-à-vis the first principals 303 and the second principals 301B were presented above with respect to the method 100 of the FIG. 1 and described in terms of a P2P registration service.

The P2P registration system 300 also depicts a second P2P service 301C. This second P2P service 301C is the actual service that connects directly with the P2P service 301A in a P2P connection 301D. The two services 301A and 301C are P2P enabled. It is the initial P2P connection 301D that is selectively regulated by the processing of the P2P registration system 300, such that an access token is used by the P2P service 301A during initial communications between the P2P service 301A and the second P2P service 301C to determine if the P2P connection 301D may be continued and established for the first principal 303 and the second principal 301B associated with the second P2P service 301C.

In an embodiment, the network service provider 302 authenticates the second principals 301B for access to the network service provider 302 before any determination is made as to whether the second principals 301B are to receive or not to receive access tokens defined during a registration process of the P2P service 301A via interactions with a first principal 303.

According to an embodiment, during registration the first principal 303 may define the criterion for accessing the P2P service 301A by means of a list of identifiers. The identifiers are uniquely associated with the second principals 301B. In other cases or in complimentary cases, the first principal 303 may supply a list of attributes or other constraints during registration with the network service provider 302. During operation the network service provider 302 dynamically determines if the second principals 301B have the attributes before distributing the access tokens.

The P2P service 301A processes on a client or within a local environment on machines or devices associated with the first principal 303. Similarly, the second P2P service 301C processes on a client or within a local environment on machines or devices associated with the second principal 301B. The second principal 301B attempts to access the P2P service 301A in a P2P connection 301D via its P2P service 301C by supplying the access token acquired from the network service provider 302.

FIG. 4 is a diagram of another P2P registration system 400, according to an example embodiment. The P2P registration system 400 is implemented in a machine-accessible and readable medium and is accessible over a network. The network may be wired, wireless, or a combination of wired and wireless. The processing of the P2P registration system reflects the processing of two P2P services that interact over via a P2P connection with one another in a secure fashion.

The P2P registration system 400 includes a first P2P service 401A and a second P2P service 402A. Each of these services 401A-401B and their interactions with one another will now be discussed in great detail.

The P2P registration system 400 reflects the perspective of two P2P services that interact in a selective manner, which is independent of domains associated with those two P2P service. Thus, the P2P registration system 400 may be viewed as the interactions occurring between the first principal's 303 P2P service 301A and the second principal's 301B P2P service 301C depicted with the P2P registration system 300 of the FIG. 3.

The first P2P service 401A is registered by a first principal. The first principal is associated with a first network service provider 401B. The first network service provider 401B is in a trusted relationship with a second network service provider 402B. The first principal signs into the first network service provider 401B and obtains authentication and sign in status with the second network service provider by means of the trust relationship between the first network service provider 401B and the second network service provider 402B.

The first principal proceeds to interact with the second network service provider 402B in the manners described above with respect to the FIGS. 1 and 3 for purposes of registering the first P2P service 401A and defining access criterion or criteria. A second principal then authenticates to its network service provider (network service provider 402B) and is supplied an access token if the second principal conforms to the criterion or criteria.

Once an access token is acquired, the second P2P service 402A establishes a P2P connection 403 with the first P2P service 401A by presenting the access token. The processing of the first P2P service 401A is defined above with respect to the FIGS. 2 and 3. If conditions are met with the access token, then the P2P connection 403 established and may continue unabated in the absence of some terminating event or condition.

One now appreciates how P2P connections and P2P enabled services may be selectively established and managed in a secure manner across multiple domains. Such has not been the case, where P2P access was largely controllable on a coarse-grain level and not at a fine-grain level, which has been presented herein.

It should also be noted that although the P2P interactions were discussed in terms of a first principal, such as a user, and a second principal, such as another user, that the P2P services may actually run on a different machine as a proxy for a particular principal. So, the P2P occurs between a proxy (a first principal) and another principal. In this case, three parties may be involved and the P2P occurs with a proxy (first party) or another service (first party) that acts on behalf of a user (second party) to interact with another service (third party).

## Claims

1. A method, comprising:
processing (110), at a registration service that is an enhancement within a network service provider, a registration for a peer-to-peer, P2P, service (301A) from a first principal (303), via a device of the first principal and via a P2P connection between a device of the registration service and the device of the first principal, the registration including a criterion for accessing the P2P service, the criterion being a condition, set of conditions, or identifier that is evaluated or inspected by the registration service to make a determination that a second principal is to be granted access to the P2P service;
determining (120), at the registration service, that the second principal (301B) on a device of the second principal, conforms to the criterion; and
supplying (130) an access token to the second principal via the device of the second principal that the second principal uses for securely accessing the P2P service of the first principal over another P2P network connection (301D) between the device of the second principal and the device of the first principal.

2. The method of claim 1, wherein determining (120) further includes recognizing (121) an identifier that specifically references the second principal (301B) within the criterion.

3. The method of claim 1, wherein determining (120) further includes recognizing (122) attributes in the criterion that are possessed or provided by the second principal (301B).

4. The method of claim 1 further comprising, authenticating (112), at the registration service, the second principal (301 B) before determining that the second principal conforms to the criterion.

5. The method of claim 1 further comprising, embedding (131) at the registration service, dynamic constraints in the token supplied to the second principal (301B), wherein the dynamic constraints are evaluated by the P2P service when the second principal attempts to access the P2P service.

6. The method of claim 1 further comprising, representing (132), at the registration service, the token as an assertion that is recognized and relied upon by the P2P service when presented by the second principal.

7. The method of claim 1, wherein processing (110) further includes authenticating (111) the first principal (303) for authority to register the P2P service in response to the first principal being recognized as having logged into and been authenticated with a different network service provider (402B).

8. The method of claim 1, further comprising:
receiving (210), at a registered P2P service, an access request from a first principal (303) over a peer-to-peer ,P2P, network connection (301D), the registered P2P service processing on a device of a second principal and an access token previously supplied to the first principal when the second principal registered the registered P2P service with a network service provider, and the first principal associated with another device that uses the access token to attempt a P2P connection to the registered P2P service;
inspecting (220), at the registered P2P service, the request to determine if an access token is present; and
permitting at the registered P2P service, P2P access (230) to the first principal if the access token is present.

9. The method of claim 8 further comprising, dynamically verifying (240), at the registered P2P service, attributes defined in the access token.

10. The method of claim 9 further comprising, dynamically terminating, at the registered P2P service, P2P access (250) if the attributes cannot be verified.

11. The method of claim 8 further comprising, recognizing (260), at the registered P2P service, the access token as an assertion from the network provider service.

12. The method of claim 8 further comprising, terminating, at the registered P2P service, P2P access (270) if the first principal violates a policy.

13. The method of claim 12 further comprising, identifying (271), at the registered P2P service, the policy as a component of the access token.

14. The method of claim 12 further comprising, identifying (272), at the registered P2P service, the policy from a policy store in response to an identifier associated with the second principal (301B).

15. A system, comprising:
a peer-to-peer, P2P, service (301A) that processes on a client of a first principal; and
a network service provider (302), which is associated with a separate device from that which is associated with the P2P service, the network service provider being adapted to:
process (110), at a registration service that is an enhancement within the network service provider, a registration for the peer-to-peer service (301A) from the first principal (303), via a device of the first principal and via a P2P connection between a device of the registration service and the device of the first principal, the registration including a criterion for accessing the P2P service, the criterion being a condition, set of conditions, or identifier that is evaluated or inspected by the registration service to make a determination that a second principal is to be granted access to the P2P service;
determine (120), at the registration service, that the second principal (301B) on a device of the second principal, conforms to the criterion; and
supply (130) an access token to the second principal via the device of the second principal that the second principal uses for securely accessing the P2P service of the first principal over another P2P network connection (301D) between the device of the second principal and the device of the first principal.

16. The system of claim 15, wherein the network service provider (302) is adapted to authenticate the second principal (301B) for access to the network service provider service.

17. The system of claim 15, wherein the network service provider (302) is adapted to acquire a list of identifiers that identifies the second principal (301B) during the registration of the P2P service.

18. The system of claim 15, wherein the network service provider (302) is adapted to acquire a list of attributes during the registration of the P2P service, and wherein the network service provider (302) is adapted to dynamically determine if the second principal (301B) has the attributes before distributing the access token.

19. The system of claim 15, wherein the access token is used by another second version (301C) of the P2P service that is adapted to process on the client of the second principal (301B), the second version (301C) and the P2P service (301A) interact directly with one another over a P2P network connection (301 D).

20. The system of claim 15, wherein the P2P service (301A) processes on the client of the first principal and is identified to the network service provider (302) via the registration.

21. The system of claim 15, with the modification that the peer-to-peer, P2P, service comprises:
a first peer-to-peer service (401A); and
a second P2P service (402A), the first P2P service processing on a first client of a first principal and is registered with a network service provider (401 B), the registration including access limitations that are managed by the network service provider, which is on a separate device for that which is associated with the first and second P2P services, and the second P2P service processing on a second client of a second principal and is to gain P2P access to the first P2P service by acquiring an access token from the network service provider that conforms to the access limitations, the second P2P service acquiring the access token from the network service provider when the first P2P service is registered by the first principal and before the second P2P service requests access to the first P2P service.

22. The system of claim 21, wherein the access limitations are at least partially embedded (131) in the access token and dynamically resolved by the first P2P service (401A) when the second P2P service (402A) attempts access to the first P2P service.

23. The system of claim 21, wherein the access token is represented as a signed assertion from the network service provider that the second principal conforms to the access limitations and wherein the first P2P service (401 A) relies on the signed assertion to provide access to the second P2P service (402A).

24. The system of claim 21, wherein the network service provider is adapted to authenticate the second principal before determining if the second principal conforms to the access limitations.

25. The system of claim 21, wherein the access token permits the second P2P service (402A) to access the first P2P service in a secure fashion that is authorized by the first principal, and wherein access is via a P2P network connection (403).

26. The system of claim 21, wherein the first principal logs into the network service provider via a different network service provider (402B) associated with the first principal and trusted by the network service provider (401 B).

## Patentansprüche

1. Verfahren, umfassend:
von einem Registrierungsdienst, welcher eine Erweiterung innerhalb eines Netzwerkdienstproviders ist, Bearbeiten (110) einer Registrierung für einen Peer-to-Peer, P2P, -Dienst (301A) von einem ersten Prinzipal (303) über ein Gerät des ersten Prinzipals und über eine P2P-Verbindung zwischen einem Gerät des Registrierungsdienstes und dem Gerät des ersten Prinzipals, wobei die Registrierung ein Kriterium zum Zugreifen auf den P2P-Dienst enthält, wobei das Kriterium eine Bedingung, ein Satz von Bedingungen oder ein Identifizierer ist, welches durch den Registrierungsdienst evaluiert oder untersucht wird, um eine Bestimmung derart vorzunehmen, dass einem zweiten Prinzipal Zugriff auf den P2P-Dienst zu gewähren ist;
von dem Registrierungsdienst, Bestimmen (120), dass der zweite Prinzipal (301 B) an einem Gerät des zweiten Prinzipals das Kriterium erfüllt; und
Bereitstellen (130) eines Zugriffstokens an den zweiten Prinzipal über das Gerät des zweiten Prinzipals, welches der zweite Prinzipal verwendet, zum sicheren Zugreifen auf den P2P-Dienst des ersten Prinzipals über eine andere P2P-Netzwerkverbindung (301 D) zwischen dem Gerät des zweiten Prinzipals und dem Gerät des ersten Prinzipals.

2. Verfahren nach Anspruch 1, wobei das Bestimmen (120) ferner Erkennen (121) eines Identifizierers enthält, welcher eigens den zweiten Prinzipal (301 B) mit dem Kriterium referenziert.

3. Verfahren nach Anspruch 1, wobei das Bestimmen (120) ferner Erkennen (122) von Attributen in dem Kriterium enthält, welche sich im Besitz des zweiten Prinzipals (301 B) befinden oder vom zweiten Prinzipal (301 B) bereitgestellt werden.

4. Verfahren nach Anspruch 1, ferner umfassend, von dem Registrierungsdienst, Authentifizieren (112) des zweiten Prinzipals (301 B) vor dem Bestimmen, dass der zweite Prinzipal das Kriterium erfüllt.

5. Verfahren nach Anspruch 1, ferner umfassend, von dem Registrierungsdienst, Einfügen (131) von dynamischen Randbedingungen in das Token, welches dem zweiten Prinzipal (301 B) bereitgestellt wird, wobei die dynamischen Randbedingungen durch den P2P-Dienst evaluiert werden, wenn der zweite Prinzipal versucht, auf den P2P-Dienst zuzugreifen.

6. Verfahren nach Anspruch 1, ferner umfassend, von dem Registrierungsdienst, Verkörpern (132) des Token als eine Versicherung, die von dem P2P-Dienst erkannt wird und auf die sich der P2P-Dienst verlässt, wenn es von dem zweiten Prinzipal vorgelegt wird.

7. Verfahren nach Anspruch 1, wobei das Bearbeiten (110) ferner Authentifizieren (111) des ersten Prinzipals (303) zur Ermächtigung enthält, den P2P-Dienst zu registrieren, als Antwort darauf, dass der erste Prinzipal als angemeldet an und authentifiziert mit einem anderen Netzwerkdienstprovider (402B) erkannt wird.

8. Verfahren nach Anspruch 1, ferner umfassend:
von einem registrierten P2P-Dienst, Empfangen (210) einer Zugriffsanfrage von einem ersten Prinzipal (303) über eine Peer-to-Peer, P2P, -Netzwerkverbindung (301 D), wobei der registrierte P2P-Dienst auf einem Gerät eines zweiten Prinzipals ausgeführt wird, und eines Zugriffstoken, welches vorher dem ersten Prinzipal bereitgestellt wurde, wenn der zweite Prinzipal den registrierten P2P-Dienst mit einem Netzwerkdienstprovider registriert und der erste Prinzipal, der einem anderen Gerät zugeordnet ist, welches das Zugriffstoken verwendet, eine P2P-Verbindung zu dem registrierten P2P-Dienst versucht;
von dem registrierten P2P-Dienst, Untersuchen (220) der Anfrage, um zu bestimmen, ob ein Zugriffstoken vorhanden ist; und
von dem registrierten P2P-Dienst, Zulassen eines P2P-Zugriffs (230) von dem ersten Prinzipal, falls das Zugriffstoken vorhanden ist.

9. Verfahren nach Anspruch 8, ferner umfassend, von dem registrierten P2P-Dienst, dynamisches Überprüfen (240) von Attributen, die in dem Zugriffstoken definiert sind.

10. Verfahren nach Anspruch 9, ferner umfassend, von dem registrierten P2P-Dienst, dynamisches Beenden des P2P-Zugriffs (250), falls die Attribute nicht überprüft werden können.

11. Verfahren nach Anspruch 8, ferner umfassend, von dem registrierten P2P-Dienst, Erkennen (260) des Zugriffstoken als eine Versicherung von dem Netzwerkproviderdienst.

12. Verfahren nach Anspruch 8, ferner umfassend, von dem registrierten P2P-Dienst, Beenden des P2P-Zugriffs (270), falls der erste Prinzipal eine Richtlinie verletzt.

13. Verfahren nach Anspruch 12, ferner umfassend, von dem registrierten P2P-Dienst, Identifizieren (271) der Richtlinie als eine Komponente des Zugriffstokens.

14. Verfahren nach Anspruch 12, ferner umfassend, von dem registrierten P2P-Dienst, Identifizieren (272) der Richtlinie von einem Richtlinienspeicher als Antwort auf einen Identifizierer, der dem zweiten Prinzipal (301 B) zugeordnet ist.

15. System, umfassend:
einen Peer-to-Peer, P2P, -Dienst (301A), welcher auf einem Client eines ersten Prinzipals ausgeführt ist;
einen Netzwerkdienstprovider (302), welcher einem Gerät zugeordnet ist, das von dem getrennt ist, welches dem P2P-Dienst zugeordnet ist, wobei der Netzwerkdienstprovider dazu ausgelegt ist:
von einem Registrierungsdienst, der eine Erweiterung innerhalb des Netzwerkdienstproviders ist, eine Registrierung für den Peer-to-Peer-Dienst (301 A) von dem ersten Prinzipal (303) über ein Gerät des ersten Prinzipals und über eine P2P-Verbindung zwischen einem Gerät des Registrierungsdienstes und dem Gerät des ersten Prinzipals zu bearbeiten (110), wobei die Registrierung ein Kriterium zum Zugreifen auf den P2P-Dienst enthält, wobei das Kriterium eine Bedingung, ein Satz von Bedingungen oder ein Identifizierer ist, welches durch den Registrierungsdienst evaluiert oder untersucht wird, um eine Bestimmung derart vorzunehmen, dass einem zweiten Prinzipal Zugriff auf den P2P-Dienst zu gewähren ist;
von dem Registrierungsdienst zu bestimmen (120), dass der zweite Prinzipal (301 B) an einem Gerät des zweiten Prinzipals das Kriterium erfüllt; und
ein Zugriffstoken an den zweiten Prinzipal über das Gerät des zweiten Prinzipals, welches der zweite Prinzipal verwendet, zum sicheren Zugreifen auf den P2P-Dienst des ersten Prinzipals über eine andere P2P-Netzwerkverbindung (301 D) zwischen dem Gerät des zweiten Prinzipals und dem Gerät des ersten Prinzipals bereitzustellen (130).

16. System nach Anspruch 15, wobei der Netzwerkdienstprovider (302) dazu ausgelegt ist, den zweiten Prinzipal (301 B) zum Zugriff auf den Netzwerkdienstproviderdienst zu authentifizieren.

17. System nach Anspruch 15, wobei der Netzwerkdienstprovider (302) dazu ausgelegt ist, eine Liste von Identifizieren zu erlangen, die den zweiten Prinzipal (201 B) während der Registrierung des P2P-Dienstes identifiziert.

18. System nach Anspruch 15, wobei der Netzwerkdienstprovider (302) dazu ausgelegt ist, eine Liste von Attributen während der Registrierung des P2P-Dienstes zu erlangen, und wobei der Netzwerkdienstprovider (302) dazu ausgelegt ist, vor dem Verteilen des Zugriffstokens dynamisch zu bestimmen, ob der zweite Prinzipal (301 B) die Attribute aufweist.

19. System nach Anspruch 15, wobei das Zugriffstoken durch eine andere zweite Version (301 C) des P2P-Dienstes, welche dazu ausgelegt ist, auf dem Client des zweiten Prinzipals (301B) ausgeführt zu werden, verwendet ist, wobei die zweite Version (301 C) und der P2P-Dienst (301 A) unmittelbar miteinander über eine P2P-Netzwerkverbindung (301 D) interagieren.

20. System nach Anspruch 15, wobei der P2P-Dienst (301A) auf dem Client des ersten Prinzipals ausführt und mittels einer Registrierung an dem Netzwerkdienstprovider (302) identifiziert ist.

21. System nach Anspruch 15, mit der Änderung, dass der Peer-to-Peer, P2P, -Dienst umfasst:
einen ersten Peer-to-Peer-Dienst (401 A); und
einen zweiten P2P-Dienst (402A), wobei der erste P2P-Dienst auf einem ersten Client eines ersten Prinzipals ausgeführt und an einem Netzwerkdienstprovider (401B) registriert ist, wobei die Registrierung Zugriffsbeschränkungen enthält, die durch den Netzwerkdienstprovider verwaltet sind, welcher auf einem Gerät ist, das von jenen getrennt ist, welche dem ersten und dem zweiten P2P-Dienst zugeordnet sind, und wobei der zweite P2P-Dienst auf einem zweiten Client eines zweiten Prinzipals ausgeführt ist und einen P2P-Zugriff auf den ersten P2P-Dienst durch Erlangen eines Zugriffstokens von dem zweiten Netzwerkdienstprovider erhält, welcher die Zugriffsbeschränkungen erfüllt, wobei der zweite P2P-Dienst das Zugriffstoken von dem Netzwerkdienstprovider erlangt, wenn der erste P2P-Dienst durch den ersten Prinzipal registriert ist und bevor der zweite P2P-Dienst einen Zugriff auf den ersten P2P-Dienst anfragt.

22. System nach Anspruch 21, wobei die Zugriffsbeschränkungen wenigstens teilweise in das Zugriffstoken eingefügt (131) und dynamisch durch den ersten P2P-Dienst (401A) aufgelöst sind, wenn der zweite P2P-Dienst (402A) versucht, auf den ersten P2P-Dienst zuzugreifen.

23. System nach Anspruch 21, wobei das Zugriffstoken eine signierte Versicherung, dass der zweite Prinzipal die Zugriffsbeschränkungen erfüllt, von dem Netzwerkdienstprovider verkörpert und wobei der erste P2P-Dienst (401 A) sich auf die signierte Versicherung verlässt, um den Zugriff auf den zweiten P2P-Dienst (402A) bereitzustellen.

24. System nach Anspruch 21, wobei der Netzwerkdienstprovider dazu ausgelegt ist, den zweiten Prinzipal vor dem Bestimmen, dass der zweite Prinzipal die Zugriffsbeschränkungen erfüllt, zu authentifizieren.

25. System nach Anspruch 21, wobei das Zugriffstoken dem zweiten P2P-Dienst (402A) erlaubt, auf den ersten P2P-Dienst in einer sicheren Art und Weise, die durch den ersten Prinzipal autorisiert ist, zuzugreifen, und wobei der Zugriff über eine P2P-Netzwerkverbindung (403) erfolgt.

26. System nach Anspruch 21, wobei sich der erste Prinzipal an dem Netzwerkdienstprovider über einen anderen Netzwerkdienstprovider (402B) anmeldet, der dem ersten Prinzipal zugeordnet ist und dem der Netzwerkdienstprovider (401 B) vertraut.

## Revendications

1. Procédé, comprenant :
traiteur (110), en un service d'enregistrement qui est une amélioration au sein d'un fournisseur de services réseau, un enregistrement pour an service poste-à-poste, P2P, (301A) auprès d'un premier mandant (303), via un dispositif du premier mandant et via une connexion P2P entre un dispositif du service d'enregistrement et le dispositif du premier mandant, l'enregistrement incluant un critère pour accéder au service P2P, le critère étant une condition, un ensemble de conditions ou un identifiant qui est évalué ou inspecté par le service d'enregistrement pour effectuer une détermination que l'accès à un second mandant doit être accordé au service P2P ;
déterminer (120), en le service d'enregistrement, que le second mandant (301B) sur un dispositif du second mandant est conforme au critère ; et
fournir (130) un jeton d'accès au second mandant via le dispositif du second mandant que le second mandant utilisa pour accéder de manière sécurisée au service P2P du premier mandant via une autre connexion réseau P2P (301D) entre le dispositif du second mandant et le dispositif du premier mandant.

2. Procédé selon la revendication 1, dans lequel la détermination (120) inclut en outre la reconnaissance (121) d'un identifiant qui fait spécifiquement référence au second mandant (301B) dans le critère.

3. Procédé selon la revendication 1, dans lequel la détermination (120) inclut en outre la reconnaissance (122) d'attributs dans le critère qui sont possédés ou fournis par le second mandant (301B).

4. Procédé selon la revendication 1, comprenant en outre l'authentification (112), en le service d'enregistrement, du second mandant (301B) avant de déterminer que le second mandant est conforme au critère.

5. Procédé selon la revendication 1, comprenant en outre l'intégration (131), en le service d'enregistrement, de contraintes dynamique dans le jeton fourni au second mandant (301B), dans lequel les contraintes dynamiques sont évaluées par le service P2P lorsque le second mandant tente d'accéder au service P2P.

6. Procédé selon la revendication 1, comprenant en outre la représentation (132), en le service d'enregistrement, du jeton en tant qu'assertion qui est reconnue par le service P2P et à laquelle se fie celui-ci lorsqu'il est présenté par le second mandant.

7. Procédé selon la revendication 1, dans lequel le traitement (110) inclut en outre l'authentification (111) du premier mandant (303) pour qu'une autorité enregistre le service P2P en réponse au fait que le premier mandant est reconnu comme s'étant connecté à un fournisseur de services réseau différent et ayant été authentifié avec celui-ci.

8. Procédé selon la revendication 1, comprenant en outre :
recevoir (210), en un service P2P enregistré, une requête d'accès d'un premier mandant (303) via une connexion réseau poste-à-poste, P2P, (301D), le service P2P enregistré s'exécutant sur un dispositif d'un second mandant et un jeton d'accès ayant été précédemment fourni au premier mandant lorsque le second mandant a enregistré le service P2P enregistré avec un fournisseur de services réseau, et le premier mandant étant associé à un autre dispositif qui utilise le jeton d'accès pour teinter une connexion P2P au service P2P enregistré ;
inspecter (220), en le service P2P enregistré, la requête pour déterminer si un jeton d'accès est présuent; et
permettre, en le service P2P enregistré, un accès P2P (230) au premier mandant si le jeton d'accès est présent.

9. Procédé selon la revendication 8, comprenant en outre la vérification dynamique (240), en le service P2P enregistré, d'attributs définis dans le jeton accès.

10. Procédé selon la revendication 9, comprenant en outre la coupure dynamique, en le service P2P enregistre, de l'accès P2P (250) si les attributs ne peuvent pas être vérifiés.

11. Procédé selon la revendication 8, comprenant en outre la reconnaissance (260), en le service P2P enregistré, du jeton d'accès en tant qu'assertion du service de fournisseur de réseau.

12. Procédé selon la revendication 8, comprenant en outre la coupure, en le service P2P enregistré, de l'accès P2P (270) si le premier mandant enfreint une politique.

13. Procédé selon la revendication 12, comprenant en outre l'identification (271), en le service P2P enregistré, de la politique en tant que composant du jeton d'accès.

14. Procédé selon la revendication 12, comprenant en outre l'identification (272), en le service P2P enregistré, de la politique à partir d'un magasin de politiques en réponse à un identifiant associé au second mandant (301B).

15. système, comprenant :
un service poste-à-poste, P2P, (301A) qui s'exécute sur un client d'un premier mandant ; et
un fournisseur de services réseau (302), qui est associé à un dispositif séparé de celui qui est associé au service P2P, le fournisseur de services réseau étant adapté pour :
traiter (110), en un service d'enregistrement qui est une amélioration au sein du fournisseur de services réseau, un enregistrement pour le service poste-à-poste (301A) à partir du premier mandant (303), via un dispositif du premier mandant et via une connexion P2P entre un dispositif du service d'enregistrement est le dispositif du premier mandant, l'enregistrement incluant un critère pour accéder au service P2P, le critère. étant une condition, un ensemble de conditions ou un identifiant qui est évalué ou inspecté par le service d'enregistrement pour effectuer une détermination que l'accès à un second mandant dot être accordé au service P2P ; a
déterminer (120), en le service d'enregistrement, que le second mandant (301B) sur un dispositif du second mandant, est conforme au critère ; et
fournir (130) un jeton d'accès au second mandant via le dispositif du second mandant que le second mandant utilise pour accéder de manière sécurisée au service P2P du premier mandant via une autre connexion réseau P2P (301D) entre le dispositif du second mandant et le dispositif du premier mandant.

16. Système selon la revendication 15, dans lequel le fournisseur de services réseau (302) est adapté pour authentifier le second mandant (301B) pour accéder au service du fournisseur de services réseau,

17. Système selon la revendication 15, dans lequel le fournisseur de services réseau (302) est adapté pour acquérir une liste d'identifiants qui identifier le second mandant (301B) pendant l'enregistrement du service P2P.

18. Système selon la revendication 15, dans lequel le fournisseur de services réseau (302) est adapté pour acquérir une liste d'attributs pendant l'enregistrement du service P2P, et dans lequel le fournisseur de services réseau (302) est adapté pour déterminer dynamiquement si le second mandant (301B) possède les attribut avant de distribue le jeton abcès.

19. Système selon la revendication 15, dans lequel le jeton d'accès est utilisé par une autre seconde version (301C) du service P2P qui est adaptée pour s'exécuter sur le client du second mandant (301B), la seconde version (301C) et le service P2P (301A) interagissant directement l'un avec l'autre via une connexion réseau P2P (301D).

20. Système selon la revendication 15, dans lequel le service P2P (301A) s'exécute sur le client du premier mandant et est identifie auprès du fournisseur de services réseau (302) via l'enregistrement.

21. Système selon la revendication 15, avec la modification que le service poste-à-poste, P2P, compend :
un premier service poste-à-poste (401A) ; et
un second service P2P (402A), le premier service P2P s'exécutant sur un premier client d'un premier mandant et est enregistré avec un fournisseur de services réseau (401B), l'enregistrement incluant des restrictions d'accès qui sont gérées par le fournisseur de services réseau, qui se trouve sur un dispositif séparé pour celui qui est associé aux premier et second services P2P, et le second service P2P s'exécutant sur un second client d'un second mandant et est destiné à donner un accès P2P au premier service P2P en acquérant un jeton d'accès auprès du fournisseur de services réseau qui est conforme aux restrictions d'accès, le second service P2P acquérant le jeton d'accès auprès du fournisseur de services réseau lorsque le premier service P2P est enregistré par le premier mandant et avant que le second service P2P ne demande l'accès au premier service P2P.

22. Système selon la revendication 21, dans lequel les restrictions d'accès sont au moins partiellement intégrés (131) dans le jeton d'accès et dynamiquement résolues par le premier service P2P (401A) lorsque le second service P2P (402A) tente d'accéder au premier service P2P.

23. Système selon la revendication 21, dans lequel le jeton d'accès est représenté en tant qu'assertion signée du fournisseur de services réseau que le second mandant est conforme aux restrictions d'accès et dans lequel le premier service P2P (401A) se fie à l'assertion signée pour donner accès au second service P2P (402A).

24. Système selon la revendication 21, dans lequel le fournisseur de services réseau est adapté pour authentifier le second mandant avant de déterminer si le second mandant est conforme aux restrictions d'accès.

25. Système selon la revendication 21, dans lequel le jeton d'accès permet au second service P2P (402A) d'accéder au premier service P2P d'une manière sécurisée qui est autorisée par le premier mandant, et dans lequel l'accès s'effectue via une connexion réseau P2P (403).

26. Système selon la revendication 21, dans lequel le premier mandant se connecte au fournisseur de services réseau via un fournisseur de services réseau différent (4028) associé au premier mandant et auquel le fournisseur de services réseau (401B) fait confiance.
